Europäisches Patentamt

European Patent Office

Office européen des brevets

(19)

(11) **EP 0 922 239 B1**

(12) **FASCICULE DE BREVET EUROPEEN**

(45) Date de publication et mention
de la délivrance du brevet:
**25.02.2004 Bulletin 2004/09**

(21) Numéro de dépôt: **98930825.9**

(22) Date de dépôt: **11.06.1998**

(51) Int Cl.$^7$: **G01V 11/00**

(86) Numéro de dépôt international:
**PCT/FR1998/001209**

(87) Numéro de publication internationale:
**WO 1998/057198 (17.12.1998 Gazette 1998/50)**

(54) **METHODE DE CARACTERISATION DE LA COHERENCE DE MESURES DE CARACTERISTIQUES D'UN MILIEU**

Verfahren zur Charakterisierung der Kohärenz von Messungen der Charakteristika eines Mediums

METHOD FOR CHARACTERISING THE COHERENCE OF AN ENVIRONMENT CHARACTERISTIC MEASUREMENTS

(84) Etats contractants désignés:
**FR GB IT NL**

(30) Priorité: **13.06.1997 FR 9707329**

(43) Date de publication de la demande:
**16.06.1999 Bulletin 1999/24**

(73) Titulaire: **Elf Exploration Production
92400 Courbevoie (FR)**

(72) Inventeurs:
• **THEVOUX-CHABUEL, Hugues
F-64000 Pau (FR)**
• **RABILLER, Philippe
F-64230 Lescar (FR)**

(74) Mandataire: **Levy, David et al
c/o S.A. FEDIT-LORIOT & AUTRES
CONSEILS EN PROPRIETE INDUSTRIELLE
38, Avenue Hoche
75008 Paris (FR)**

(56) Documents cités:
**GB-A- 2 215 891        US-A- 4 338 664**

• **CHUNG P W H ET AL: "HANDLING UNCERTAINTY IN ACCESSING PETROLEUM EXPLORATION DATA" REVUE DE L'INSTITUT FRANCAIS DU PETROLE, vol. 47, no. 3, 1 mai 1992, pages 305-314, XP000277937**
• **H.CARDON; R.VAN HOOGSTRATEN; P.DAVIES: "Aneural network application in geology: identification of genetic facies" PROCEEDINGS 1991 INTERN. CONF. ON ARTIF. NEURAL NETWOTKS,1991, pages 809-813, XP000430659 ESPOO FI**
• **S.G.C.FRAIHA & J.B.C.SILVA: "Factor analysis of ambiquity in geophysics" GEOPHYSICS., vol. 59, no. 7, juillet 1994, pages 1083-1091, XP002058154 TULSA US**

## Description

La présente invention concerne une méthode de caractérisation de la cohérence de mesures de caractéristiques d'un milieu et, plus particulièrement de données diagraphiques ladite méthode permettant notamment de caractériser les relations entre, d'une part, une variable qualitative dont l'origine n'est pas diagraphique et, d'autre part, des mesures diagraphiques.

Un champ pétrolier par exemple comprend un certain nombre de puits qui peuvent être proches ou éloignés les uns des autres.

Lors de l'étude d'un tel champ, les géologues n'ont en général à leur disposition qu'un nombre réduit de carottes prélevées dans un ou plusieurs puits qui sont alors considérés comme étant des puits de référence, les diverses mesures effectuées sur lesdites carottes étant considérées comme étant des mesures de référence. Sur les zones comportant des puits dits d'application et dans lesquelles aucune carotte n'a été prélevée, les spécialistes utilisent d'autres moyens pour leur étude, tels que diagraphies, sismique, etc... Les données fournies par ces autres moyens permettent de déterminer des paramètres pétro-physiques ou autres et de vérifier notamment leur cohérence avec les mesures effectuées sur les carottes disponibles. La vérification et/ou l'extrapolation des données non carottées permettent de caractériser aussi bien des variables quantitatives que des variables qualitatives.

Le géologue ou un autre spécialiste tel qu'un sédimentologue découpe la zone à partir de laquelle des carottes sont disponibles, en un certain nombre de tranches représentatives de diverses variables qualitatives telles que faciès, corps sédimentaire, environnement sédimentaire, etc... A chacune de ces variables il attribue en général un numéro. Par exemple, le faciès argileux est référencé par le numéro 1, le faciès sableux par le numéro 2, le faciès gréseux par le numéro 3, et ainsi de suite. De cette manière, on obtient une variable qualitative référencée en profondeur et contenant des valeurs entières, chaque valeur correspondant à une classe d'un point de vue diagraphique.

Il est à noter que les mesures ou descriptions sur carottes peuvent dépasser très largement la résolution des outils diagraphiques classiques tels qu'utilisés actuellement et notamment par la société SCHLUMBERGER. Mais ces descriptions sont parfois visuelles et donc subjectives car elles dépendent directement des qualités d'observation du géologue ou du sédimentologue. Une comparaison ou un parallèle entre des mesures diagraphiques effectuées dans un ou plusieurs puits d'application n'est pas aisé car on observe souvent de nombreuses zones de "mélange" c'est-à-dire que des mesures diagraphiques peuvent se retrouver dans plusieurs classes.

Pour réduire, autant que faire se peut, la subjectivité du spécialiste, il fut préconisé de mettre en oeuvre des méthodes de classification statistiques ou neuronales. Les méthodes statistiques classiques telles que développées par TETZLAFF et al. au SPWLA de 1989, JIAN et al. dans "Journal of Petroleum Geology, V. 17, January, p. 71-88, ou encore GREDER et al. au SPWLA de 1995, donnent de mauvais résultats lorsque les classes sont beaucoup trop chevauchantes, car ces méthodes dites paramétriques supposent que chaque classe suit une loi gaussienne. Or, la forme d'une classe est généralement plus complexe qu'une simple courbe de Gauss.

Les méthodes de classification neuronales, décrites notamment par CARDON et al. en 1991, ROGERS et al. dans AAPG Bulletin 1992, V. 76, n° 5 p. 38-49, HALL et al. au SPWLA de 1995 ou MOHAGHEGH en 1995 et 1996, donnent également de mauvais résultats en raison du fait que lesdites méthodes sont très sensibles aux incohérences observées dans les mesures. Dans les réseaux de neurones dont l'apprentissage est supervisé, le réseau apprend à reconnaître une forme à partir d'exemples. Or, une mesure diagraphique peut être attribuée à une classe dans une première étape, puis être attribuée à une autre classe dans une autre étape. Les réseaux de neurones à couches superposées n'arrivent pas à reconnaître qu'il s'agit d'une même mesure.

Dans ce qui précède, on a fait référence à des carottes prélevées dans un ou plusieurs puits de référence et à partir desquelles des classifications ont été réalisées à l'aide des méthodes rappelées succinctement ci-dessus. Toutefois, il faut noter que lesdites méthodes ont été appliquées aussi sur des mesures diagraphiques réalisées directement dans un puits ou plusieurs puits de référence, pour lesquelles lesdites mesures diagraphiques ont été considérées comme satisfaisantes en raison de leur précision ou parce qu'elles étaient représentatives des variables qualitatives du ou desdits puits. Il n'en demeure pas moins vrai que les résultats obtenus avec lesdites méthodes sur des mesures diagraphiques de référence n'étaient pas satisfaisants et souffraient des mêmes inconvénients. En effet, ces méthodes donnent de mauvais résultats lorsqu'un faciès non décrit dans l'ensemble d'apprentissage est rencontré dans un puits d'application et/ou lorsque la qualité des mesures diagraphiques est entachée par une calibration ou des corrections défectueuses ou encore du fait des mauvaises conditions d'acquisition.

La présente invention a pour but de remédier aux inconvénients précités et de proposer une méthode de caractérisation de la cohérence de données diagraphiques qui ne soit pas paramétrique et qui permette d'évaluer objectivement la représentativité d'un ensemble d'apprentissage formé à partir de données diagraphiques dans des ensembles d'application qui est formé de données diagraphiques à identifier, en relevant les intervalles de profondeurs sur lesquels un problème est détecté. En effet, la méthode selon la présente invention ne nécessite la connaissance d'aucun modèle probabiliste a priori grâce au fait que chaque domaine de l'ensemble d'apprentissage est déterminé par la recherche des k plus proches voisins.

La méthode de caractérisation de la cohérence de mesures effectuées dans un milieu donné, est du type consistant à :

- prélever N types de mesures de référence en chaque point ($P_i$) d'un ensemble de référence donné dudit milieu, chaque point ($P_i$) étant défini par une cote profondeur, le groupe des N mesures associées à chaque point ($P_i$) constituant une observation de référence ($X_i$),
- constituer au moins un ensemble d'apprentissage à N dimensions renfermant tous lesdits points ($P_i$),
- prélever au moins N mesures d'application en chaque point ($Q_i$) d'un ensemble d'application dudit milieu qui est différent dudit ensemble de référence, chaque groupe de mesures d'application associées audit point ($Q_i$) constituant une observation d'application ($X_i$),
- comparer chaque observation d'application (x) avec toutes les observations de référence ($X_i$) dudit ensemble d'apprentissage,

caractérisée en ce qu'elle consiste en outre à :

- construire pour chaque observation de référence ($X_i$) de l'ensemble d'apprentissage, un domaine de voisinage ($D_i$) à l'aide du processus des k- plus proches voisins (K-PPV), lesdits domaines de voisinage constituant ledit ensemble d'apprentissage qui définit une classe d'acceptation ($C_a$) pour des observations d'application (x) de l'ensemble d'application,
- définir un degré d'appartenance des observations d'application (x) à ladite classe d'acceptation ($C_a$), chaque observation d'application (x) étant affectée à la classe d'acceptation ($C_a$) lorsque son degré d'appartenance est au moins supérieur à un premier seuil ($S_1$).

Selon une autre caractéristique de l'invention, chaque observation d'application (x) est affectée à une de trois classes d'acceptation ($C_a$), d'ambiguïté ($C_o$) ou de rejet ($C_d$).
Selon une autre caractéristique de l'invention, le degré d'appartenance comprend au moins deux seuils ($S_1$, $S_2$), le deuxième seuil étant inférieur au premier seuil ($S_1$).
Selon une autre caractéristique de l'invention, une donnée d'application (x) est affectée à la classe de rejet ($C_d$) lorsque son degré d' appartenance est inférieur audit deuxième seuil ($S_2$).
Selon une autre caractéristique de l'invention, une donnée d'application (x) est affectée à la classe d'ambiguïté lorsque son degré d'appartenance est compris entre $S_1$ et $S_2$.
Selon une autre caractéristique de l'invention, le degré d'appartenance est défini par la fonction d'appartenance :

$$\mu_i(x) = e^{\left[ -\dfrac{x - X_i}{\sigma_i} \right]} \qquad (1)$$

dans laquelle

$X_i$     est une observation de l'ensemble d' apprentissage, i étant compris entre 1 et $n_a$,

$n_a$     correspond au nombre d'observation de référence de l'ensemble d' apprentissage,

$\sigma_i$     est le rayon du domaine centré sur l'observation $X_i$,

x     est une observation d'application de l'ensemble d' application.

Selon une autre caractéristique de l'invention, pour lever une ambiguïté attachée à une observation d'application (x), on construit un ensemble d'apprentissage à n-1 dimensions, la dimension enlevée correspondant à un type de mesures.
Selon une autre caractéristique de l'invention, le degré d'appartenance $\mu(x)$ correspond à la moyenne des k' plus fortes appartenances $\mu_i(x)$ aux domaines $D_i$ de l'ensemble d'apprentissage.
Selon une autre caractéristique de l'invention, la moyenne k' est comprise entre 1 et k.
Selon une autre caractéristique de l'invention, la valeur de k' est très supérieure à 1.
D'autres avantages et caractéristiques de la présente invention ressortiront mieux à la lecture du procédé, ainsi que des dessins annexés sur lesquels :

- la figure 1 est une représentation schématique des classes d'acceptation ($C_a$), d'ambiguïté ($C_o$) et de rejet ($C_d$) utilisées dans la méthode selon la présente invention;

- la figure 2 est une représentation synthétique sous la forme de logs des degrés de similitude de seuil (ST) et degré de similitude (MD) ;
- la figure 3 et une représentation schématique des domaines de voisinage $D_i$ de l'ensemble d'apprentissage tel que construit selon la méthode de la présente invention;
- les figures 4A à 4C sont des représentations diagraphiques pour un puits A ;
- les figures 5A à 5C sont des représentations diagraphiques pour un puits B ;
- les figures 6A à 6D sont des diagrammes croisés d'un ensemble d'apprentissage et des acceptation ($C_a$), ambiguïté ($C_o$) et rejet ($C_d$) concernant le puits A ;
- les figures 7A à 7D sont des diagrammes analogues à ceux des figures 6A à 6D mais avec enlèvement d'un type de mesure, le RHOB en l'occurrence ;
- les figures 8A à 8D sont des diagrammes croisés d'un ensemble d'apprentissage et des acceptation ($C_a$), ambiguïté ($C_o$) et rejet ($C_d$) concernant le puits B ;
- les figures 9A à 9D sont des diagrammes analogues à ceux des figures 8A à 8D mais dont les coordonnées sont l'ILD et le DT.

Dans un milieu donné, par exemple un champ pétrolier, on prélève ou on effectue N mesures préalables distinctes correspondant chacune à une des caractéristiques physiques du sous-sol du milieu. Les mesures préalables peuvent être de nature quelconque. Elles peuvent être des mesures statistiques effectuées au moyen d'outils spécifiques ou à l'aide de procédés appropriés. Elles peuvent être également des mesures effectuées sur une ou plusieurs carottes prélevées dans un ou plusieurs puits dudit champ pétrolier, ou encore des mesures diagraphiques effectuées dans un ou plusieurs puits forés. Dans tous les cas, ces mesures préalables constituent selon l'invention des mesures de référence. La partie du milieu dans laquelle les mesures préalables ont été effectuées délimite l'ensemble de référence.

De la même manière, les mesures qu'on effectue dans une autre partie du milieu, distincte de la précédente, sont considérées, dans la présente invention, comme étant des mesures d'application qui seront comparées aux mesures de référence. La partie dudit milieu dans laquelle sont effectuées ces mesures d'application délimite un ensemble d'application qui peut être constitué par un ou plusieurs autres puits du champ pétrolier.

Dans ce qui suit et à titre d'exemple, les mesures de référence sont des logs qui sont représentatifs d'une lithologie particulière observée dans l'ensemble de référence, notamment dans un ou plusieurs puits forés dans ledit ensemble de référence.

Les logs sont utilisés pour constituer un ensemble d'apprentissage et l'exemple de lithologie concernée comprend des faciès gréseux, silteux, gréseux cimentés avec des traces de silt-argileux et d'argile. Les logs utilisés sont notamment ceux connus sous les dénominations RHOB pour la mesure de densité, VSH pour l'indication d'argile, DT pour la mesure de la vitesse de propagation des ondes dans le milieu et ILD pour la mesure de la résistivité profonde ; bien évidemment, on peut augmenter ou diminuer le nombre de logs.

Les mesures N associées à chaque point $P_i$, de cote Z, de l'ensemble de référence, constituent une observation de référence $X_i$.

De la même manière, les N mesures associées à chaque point $Q_i$, de cote Z de l'ensemble d'application, constituent une observation d'application x.

Une première étape de la présente invention consiste à définir dans l'espace multidimensionnel, par exemple à N dimensions où N est dans l'exemple de l'invention égal au nombre 4 de logs sélectionnés, un ensemble d'apprentissage comprenant tous les points $P_i$ et auquel chaque observation d'application x est comparée.

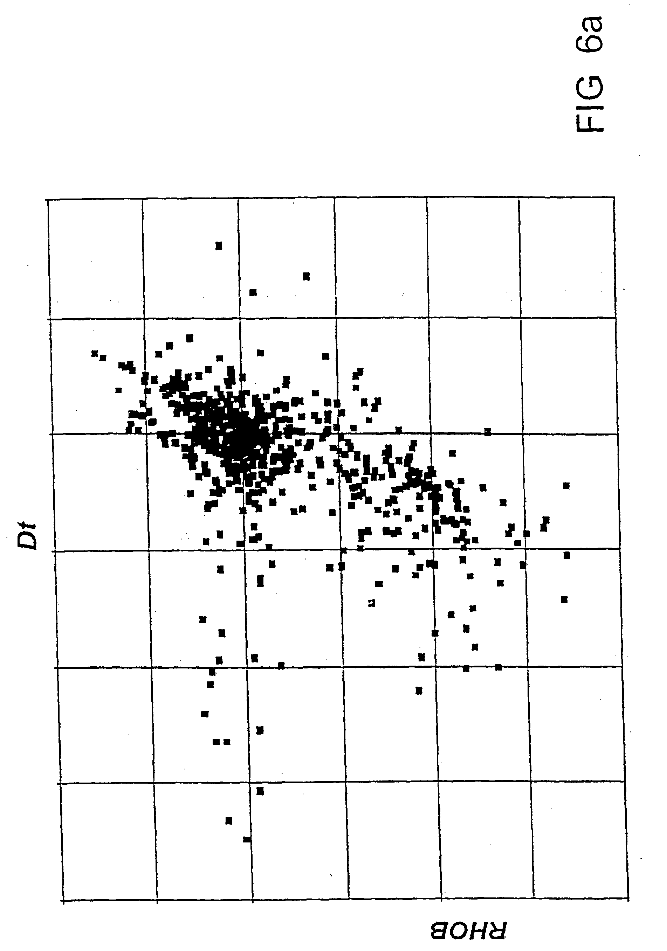

La forme de l'ensemble d'apprentissage dont plusieurs sections sont représentées sur les figures 6A à 9A sous la forme de diagrammes croisés (cross-plots) à deux dimensions RHOB et DT ou ILD et DT. est défini en caractérisant des domaines $D_i$ de voisinage. Chaque domaine de voisinage est centré sur une observation de référence $X_i$ et il est construit en recherchant les k plus proches voisins de chaque observation $X_i$. L'ensemble des domaines $D_i$ constitue l'ensemble d'apprentissage qui, à son tour, constitue une classe appelée Classe d'acceptation $C_a$. Le processus de recherche des k- plus proches voisins est notamment décrit dans l'article de DASARATHY B.V. 1991, "NEAREST NEIGHBOR (N.N.) NORMS : nn pattern classification technics" IEEE Computer Society Press TUTORIAL. ou O' CALAGHAN J.F. 1975, "An alternative definition for neighborhood of a point", IEEE transactions on computers NOV, 1121-1125.

Dans une deuxième étape, on définit un degré d'appartenance à la classe d'acceptation $C_a$. Une règle de décision permet de discriminer les observations d'un puits d'application en fonction de son degré d'appartenance à la classe d'acceptation $C_a$. Lorsque le degré d'appartenance est supérieur à un premier seuil $S_1$, l'observation d'application est affectée à la classe d'acceptation $C_a$.

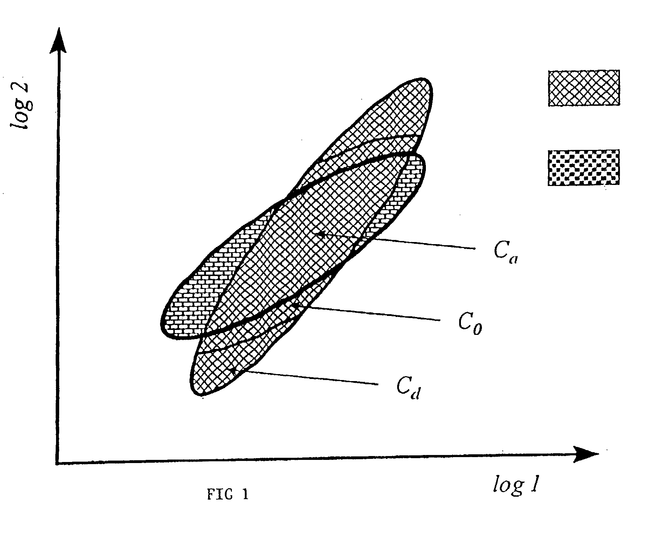

Lorsque le degré d'appartenance de l'observation d'application est inférieur au seuil $S_1$, ladite observation est rejetée soit définitivement et alors elle est affectée à une classe ($C_d$) dite de rejet, soit elle est considérée comme étant ambiguë et alors elle est affectée à une classe ($C_o$) dite d'ambiguïté. C'est ce qui est représenté schématiquement sur la figure 1, les classes d'acceptation $C_a$, d'ambiguïté $C_o$ et de rejet $C_d$ étant matérialisées schématiquement par des ellipses respectivement désignées $C_a$, $C_o$ et $C_d$ sur un diagramme croisé de log 1 et log 2, ces derniers pouvant être le RHOB, le DT, le VSH ou l'ILD.

Lorsque les observations d'un puits d'application présentent un degré d'appartenance élevé, c'est qu'elles sont proches des points constituant l'ensemble d'apprentissage et elles sont généralement incluses dans plusieurs domaines $D_i$ dudit ensemble d'apprentissage.

Lorsque les observations du même puits d'application présentent un degré d'appartenance moyen, alors on en déduit qu'elles ne sont pas trop éloignées en terme de distance euclidienne des points de l'ensemble d'apprentissage mais qu'éventuellement elles peuvent n'être incluses dans aucun des domaines $D_i$. De telles observations sont alors classées dans la classe d'ambiguïté $C_o$.

Enfin, lorsque les observations du puits d'application présentent un degré faible d'appartenance, elles sont considérées comme étant éloignées en terme de distance euclidienne des points de l'ensemble d'apprentissage et elles sont regroupées dans la classe de rejet $C_d$.

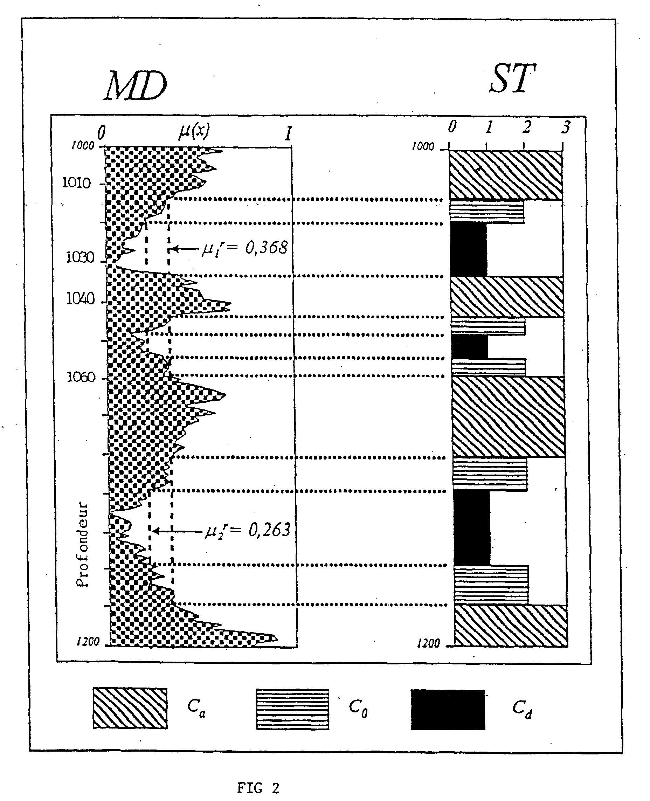

Le degré d'appartenance et l'affectation à une desdites classes, pour les observations d'application peuvent être regroupés sous la forme de deux diagraphies : une diagraphie de seuil de similitude (Similarity Threshold log ou "ST") et une diagraphie de degré de similitude (Member Ship Degree log ou "MD"), ainsi que cela est représenté à titre d'exemple synthétique sur la figure 2, les deux diagraphies étant représentées en fonction de la profondeur. Sur la partie gauche de la figure 2, qui représente la diagraphie de degré de similitude, on peut constater que ce degré est relativement élevé pour les strates (bed en anglais) de cotes 1000, 1010, 1040 et 1200, et faible entre les cotes 1020 et 1030, pour la cote 1050, et entre les cotes 1060 et 1080. En correspondance et pour les mêmes cotes sur la diagraphie de seuil de similitude (partie droite de la figure 2), on peut constater que l'observation faite dans le puits d'application entre les cotes 1000 et 1015 serait acceptée, qu'entre les cotes 1015 et 1020 elle serait considérée comme ambiguë et donc affectée à la classe d'ambiguïté $C_o$, et qu'entre la cote 1020 et un peu au-delà de la cote 1030, elle serait rejetée et donc affectée à la classe de rejet $C_d$. Les mêmes constatations s'imposent pour les autres cotes du puits d'application. Pour des raisons de simplification et de clarté, les trois classes d'acceptation $C_a$, d'ambiguïté $C_o$ et de rejet sont représentées avec des nuances différentes, ainsi que cela est indiqué dans les rectangles inférieurs de la figure 2.

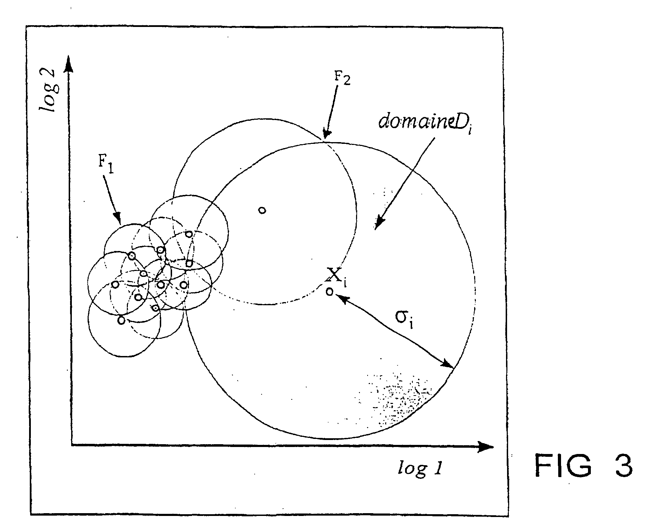

Dans l'ensemble d'apprentissage constitué par les domaines qui sont délimités par le processus connu des k plus proches voisins (figure 3), il y a des petits domaines dans les régions de l'espace fortement peuplées c'est-à-dire qu'ils présentent un rayon $\sigma_i$ de sphère petit et des grands domaines dans les régions de l'espace faiblement peuplé avec un rayon $\sigma_i$, élevé. Les petits domaines sont situés dans la zone de la figure 3 indiquée par la flèche $F_1$ et les grands domaines sont indiqués par la flèche $F_2$. Le rayon $\sigma_i$ correspond à la distance euclidienne entre $X_i$ et son $k^{ième}$ plus proche voisin.

Le choix de construire des domaines chevauchants et de taille variable a au moins une raison géologique. En effet, selon la lithologie présente dans l'espace diagraphique, la dispersion des observations peut être très différente. Par exemple, des observations reconnues comme caractéristiques de formations gréseuses, montreront une dispersion beaucoup plus faible que des observations associées à des formations argileuses.

Comme une taille excessive des domaines $D_i$ peut poser un problème quant à la validité de l'affectation à l'une des classes parce que des points éloignés en terme de distance euclidienne peuvent être affectés à la classe d'acceptation $C_a$, il est important, selon l'invention de bien déterminer le nombre k, et ce, afin que les points isolés de l'ensemble d'apprentissage ne soient pas éliminés. En effet, des points isolés peuvent traduire des faciès géologiques très significatifs même s'ils sont peu représentés et que leurs caractéristiques diagraphiques les localisent très à l'écart des faciès les plus représentés.

Une caractéristique importante de l'invention concerne donc le choix du nombre k. Comme aucune règle n'a été clairement définie pour la détermination de k dans la littérature concernant ledit processus des k plus proches voisins, l'invention préconise de construire les domaines sur les observations de référence de manière à caractériser l'espace occupé par ces observations. Lorsque le nombre de plus proches voisins k est proche de 1, les domaines sont de petite taille et ne se recouvrent pratiquement pas les uns avec les autres. Le risque de rejeter une observation d'un puits d'application alors qu'elle se projette entre plusieurs domaines est alors élevé. Par ailleurs, si on augmente de manière importante le nombre k, ce qui signifie qu'on est en présence d'un grand recouvrement des domaines entre eux, alors il y a le risque d'accepter une observation alors qu'elle est éloignée en terme de distance euclidienne de l'ensemble des domaines. Le compromis de l'invention consiste à combiner la technique du "laissé de côté" ("leave one out" en anglais) à la technique des k plus proches voisins. Une caractéristique de la présente invention consiste donc à enlever une observation de l'ensemble d'apprentissage et à classer cette observation en fonction des $n_a$-1 observations restantes et on répète ce processus $n_a$ fois. Le critère d'erreur est le nombre d'observations d'application non affectées à la classe d'acceptation $C_a$. Le nombre des plus proches voisins k est choisi de manière que la probabilité d'erreur ne soit pas très élevée, par exemple inférieure à 10 %.

Le degré d'appartenance de chaque observation x d'un puits ou ensemble d'application à chacun des domai-

nes $D_i$ de l'ensemble d' apprentissage, est défini par une fonction d'appartenance qui peut s'écrire sous la forme de l'expression suivante :

$$\mu_i(x) = e^{\left[-\dfrac{x - X_i}{\sigma_i}\right]} \qquad (1)$$

dans laquelle

$X_i$    est une observation de l'ensemble d'apprentissage, i étant compris entre 1 et $n_a$,
$n_a$    correspond au nombre d'observations $D_i$ de l'ensemble d' apprentissage,
$\sigma_i$    est le rayon du domaine centré sur l'observation $X_i$,
x    est une observation de l'ensemble d'application.

L'appartenance d'une observation x de l'ensemble d'application à un domaine $D_i$ est maximum pour $\mu_i(x) = 1$ et minimum pour $\mu_i(x)$ tendant vers zéro.

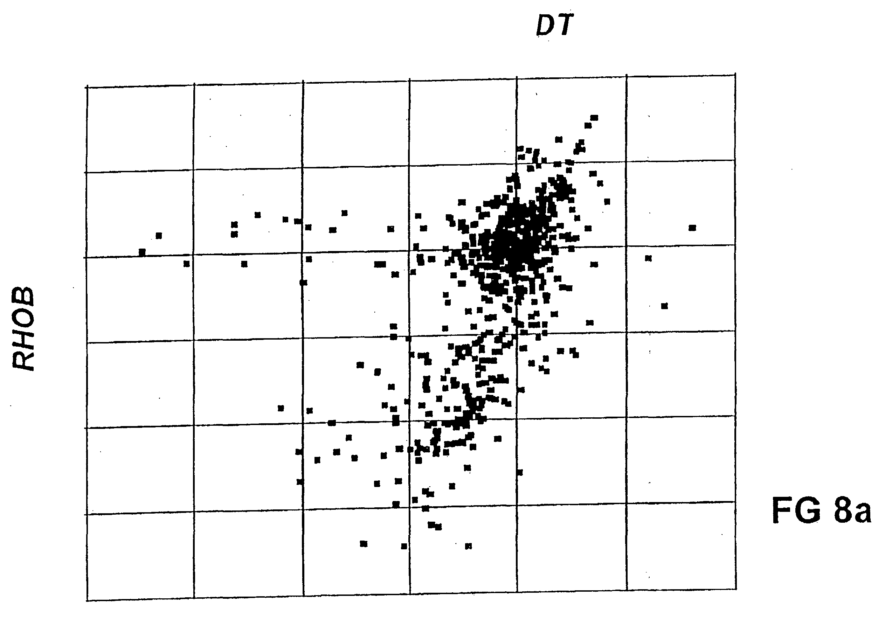

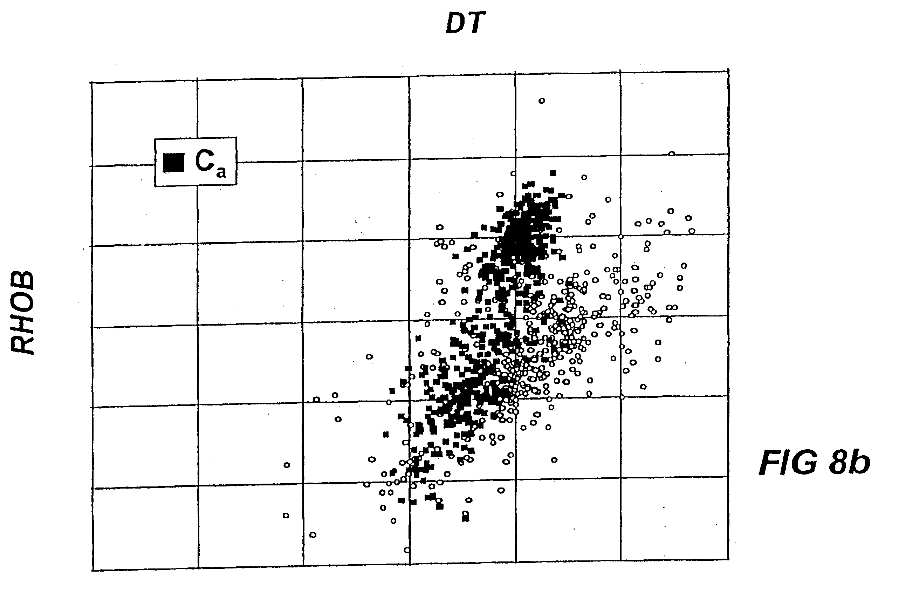

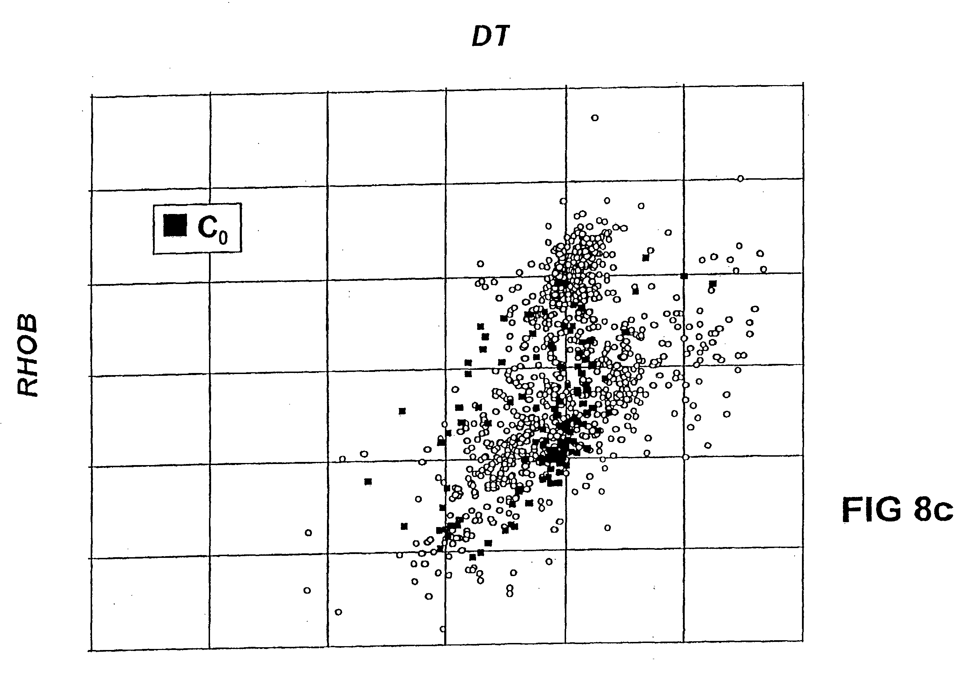

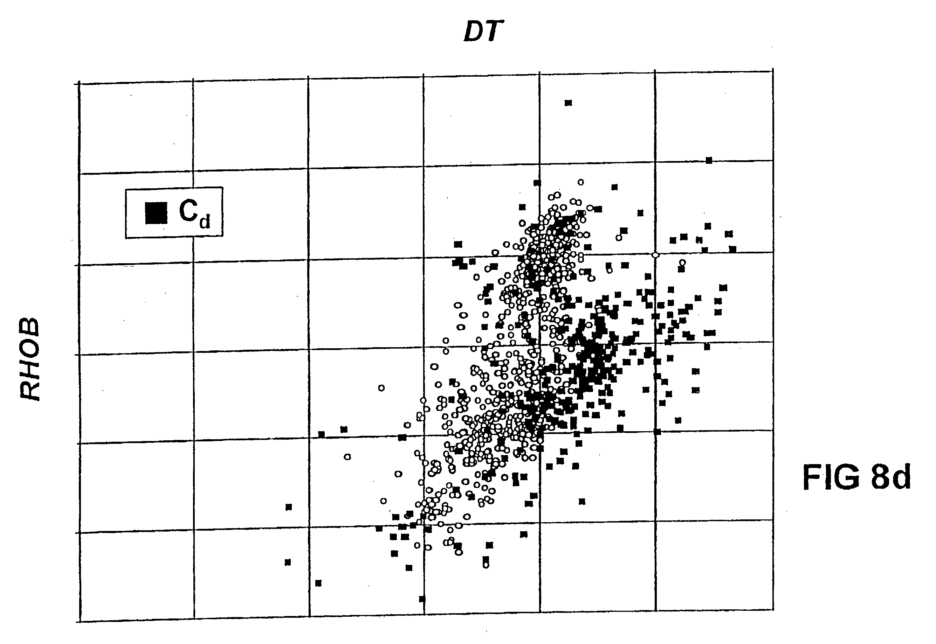

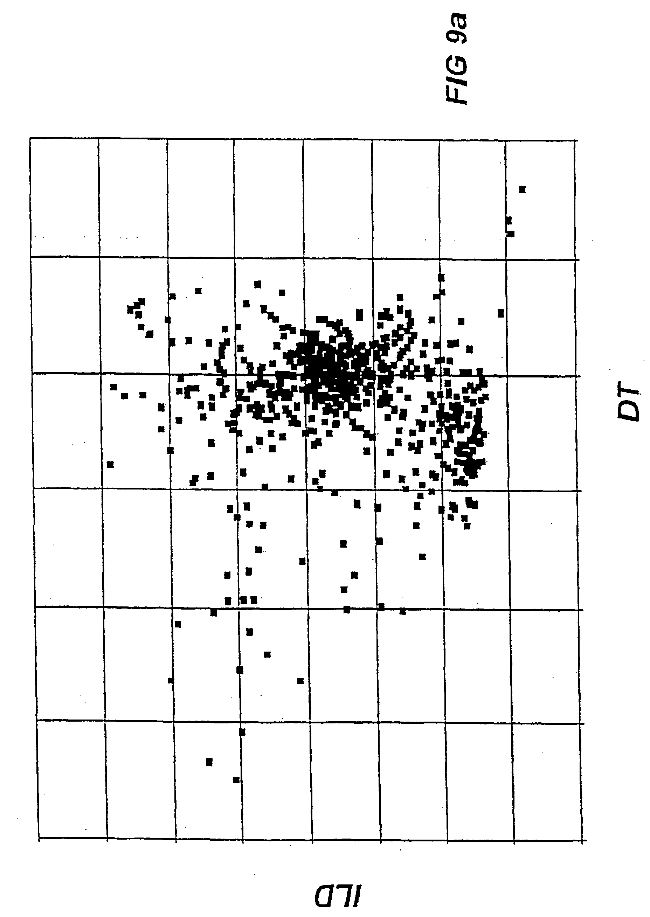

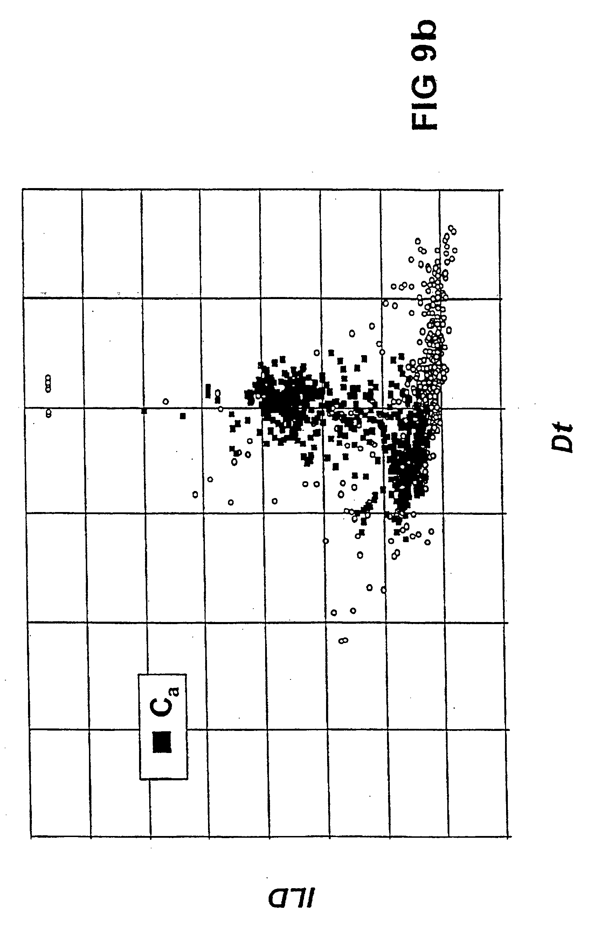

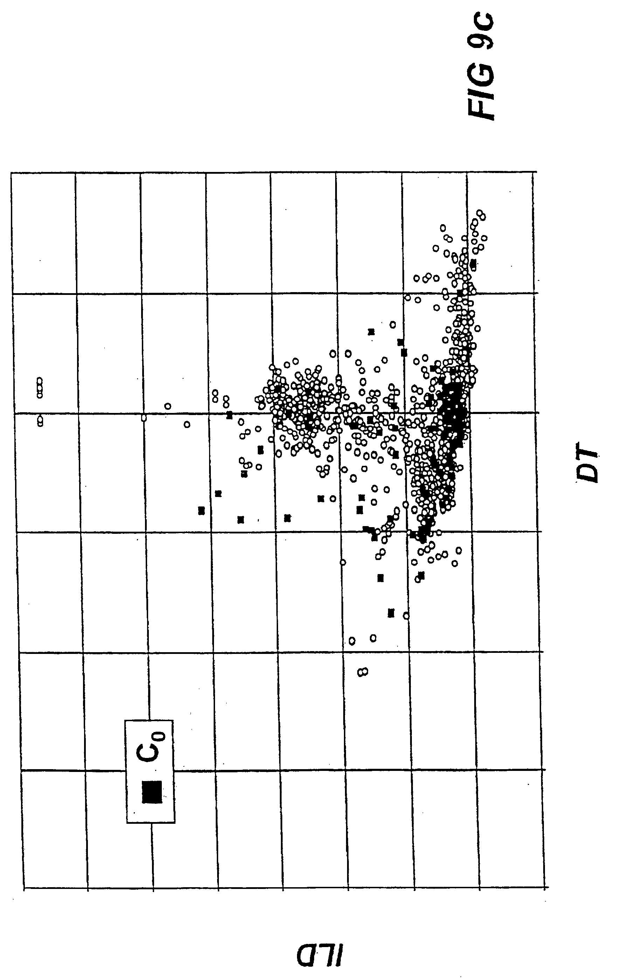

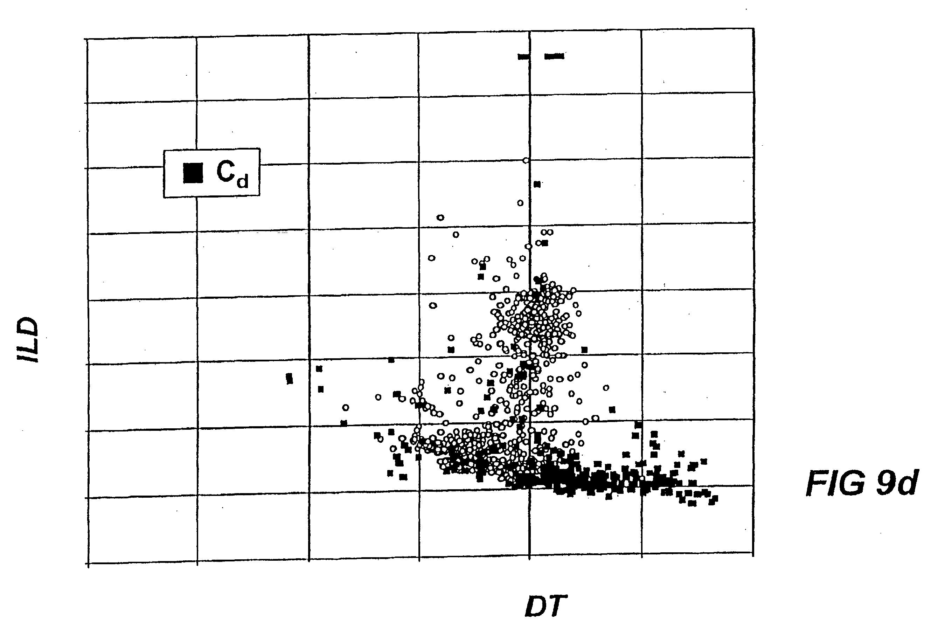

Le degré d'appartenance $\mu(x)$ correspond à la moyenne des k' plus fortes appartenances $\mu_i(x)$ aux domaines $D_i$ de l'ensemble d' apprentissage, k' étant fixé par l'utilisateur en fonction du but poursuivi et, pour limiter l'effet des points isolés dans le processus de classification, il est choisi entre 1 et k et, de préférence, nettement supérieur à 1. Un choix de k' proche de 1 ne permet pas de mettre en évidence la tendance argileuse qu'on peut remarquer sur les figures 8C et 8D ou les figures 9C et 9D, du fait de la présence, dans les ensembles d'apprentissage des figures 8A et 9A, de quelques observations de référence correspondant à des traces de faciès argileux, matérialisées par les trois points extrêmes sur la droite de la figure 8A ou par les trois points en bas à droite de la figure 9A.

Ainsi, une observation x située loin des domaines $D_i$ de l'ensemble d'apprentissage présente un faible degré d'appartenance à la classe d'acceptation $C_a$ et elle est rejetée de ladite classe d'acceptation $C_a$ si son degré d'appartenance est inférieur à un seuil $S_1$. Toutefois, ladite observation x peut être considérée comme ambiguë si son degré d'appartenance est supérieur à un deuxième seuil $S_2$.

La règle de décision peut s'écrire de la manière suivante:

x affectée à $C_a$ si $\mu(x) \geq S_1$
x affectée à $C_o$ si $S_2 \leq \mu(x) < S_1$
x affectée à $C_d$ si $\mu(x) < S_2$

Une observation x appartenant à un ensemble d'application se projette dans un domaine $D_i$ centré sur une observation de l'ensemble d'apprentissage si la distance euclidienne entre x et $X_i$ est inférieure au rayon $\sigma_i$ du domaine. En conséquence, le premier seuil $S_1$ est égal à $e^{-1} \approx 0{,}3679$ par application de la formule précédente avec x-$X_i = \sigma_i$.

Le deuxième seuil $S_2$ doit être compris entre 0 et $S_1$. Le seuil $S_2$ permet de définir une zone d'ambiguïté entre l'acceptation et le rejet. Les nombreux essais effectués ont permis de fixer avantageusement le seuil $S_2$ à une valeur égale à $e^{-1,3}$. Les mêmes essais montrent que, dans l'ensemble d' apprentissage, la probabilité d'erreur liée au seuil $S_2$ est d'environ 5 %.

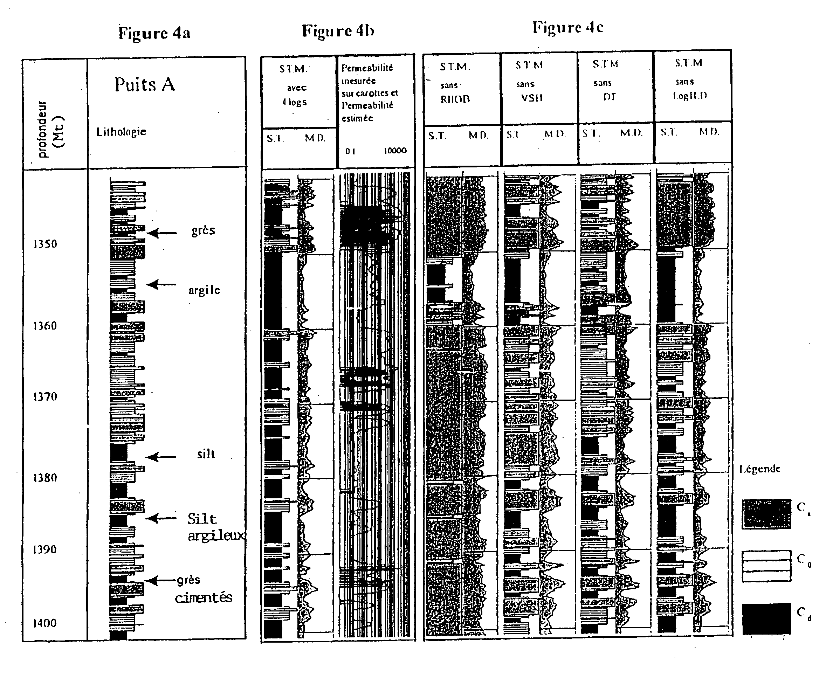

Les figures 4A à 9D sont des exemples de mise en oeuvre de la méthode selon l'invention sur deux puits d'application A et B.

Dans un champ comprenant les puits d'application A et B et des puits de référence, on veut construire un modèle d'estimation de la perméabilité afin de l'extrapoler à tous les puits dudit champ. L'ensemble d'apprentissage qui sera établi par le diagraphiste, contient des mesures de perméabilité effectuées sur des carottes prélevées dans quatre puits de référence qui ont été jugés comme étant représentatifs des formations géologiques rencontrées sur le champ. Les formations sont essentiellement, dans les exemples décrits, greso-argileuses avec des faciès conglomératiques (déposés dans des chenaux en tresse ou méandres et dans la plaine d'inondation). Préalablement, une méthode d'analyse discriminante pas à pas a permis d'évaluer quelles sont les diagraphies les plus discriminantes pour l'estimation de la perméabilité. Les diagraphies retenues sont données sous leur abréviation commerciale telle que définie par la société SCHLUMBERGER, à savoir RHOB pour la densité de la formation, DT pour la lenteur ou vitesse de propagation des ondes dans la roche, VSH pour l'indice d'argilosité, ILD pour la résistivité profonde. L'espace à N dimensions de la méthode décrite ci-dessus correspond donc à un espace à quatre dimensions puisqu'on utilise quatre diagraphies représentatives.

Sur la figure 4A, il est représenté la lithologie concernée aux diverses profondeurs (partie droite de la figure).

Sur la figure 4B (partie gauche), il est représenté le degré d'appartenance sous les deux formes diagraphiques ST pour le seuil de similitude et MD pour le degré de similitude. La partie droite de la figure 4b représente la perméabilité mesurée sur carotte ainsi que la prédiction de la perméabilité lorsqu'on prend en considération les quatre logs RHOB, VSH, DT et ILD, la prédiction étant donnée avec une échelle logarithmique comprise entre 0,1 et 10 000.

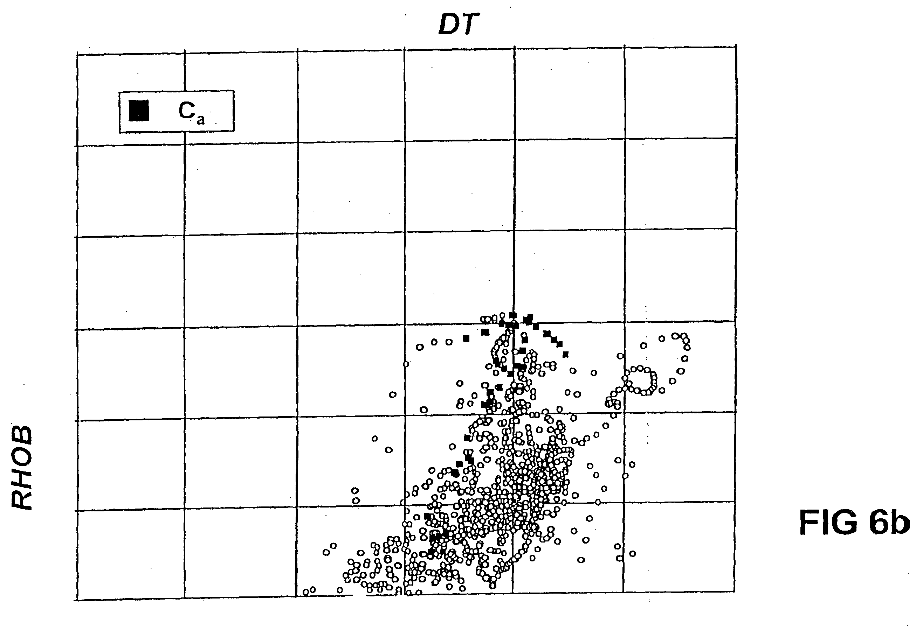

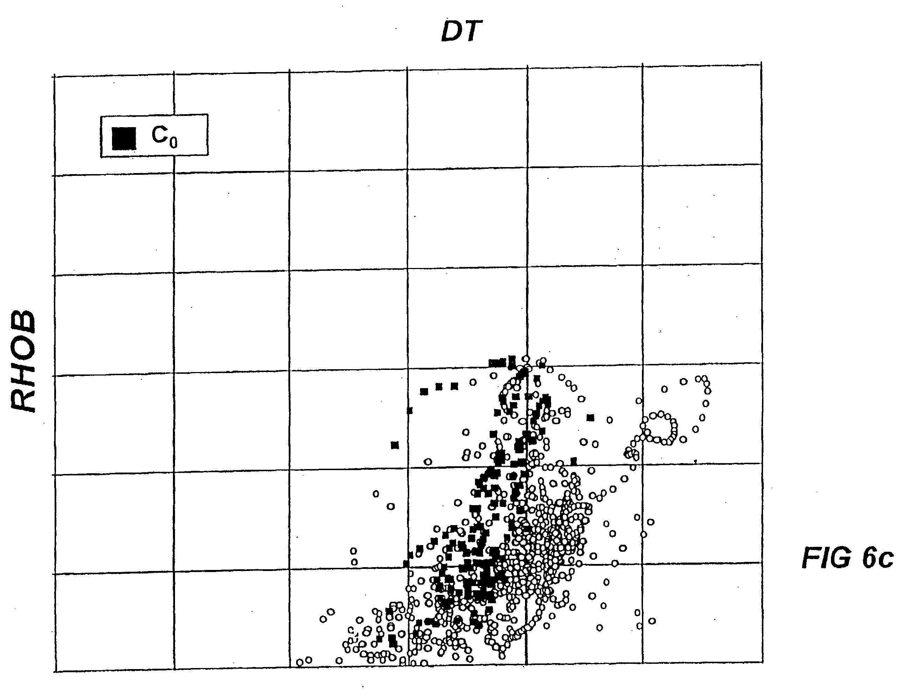

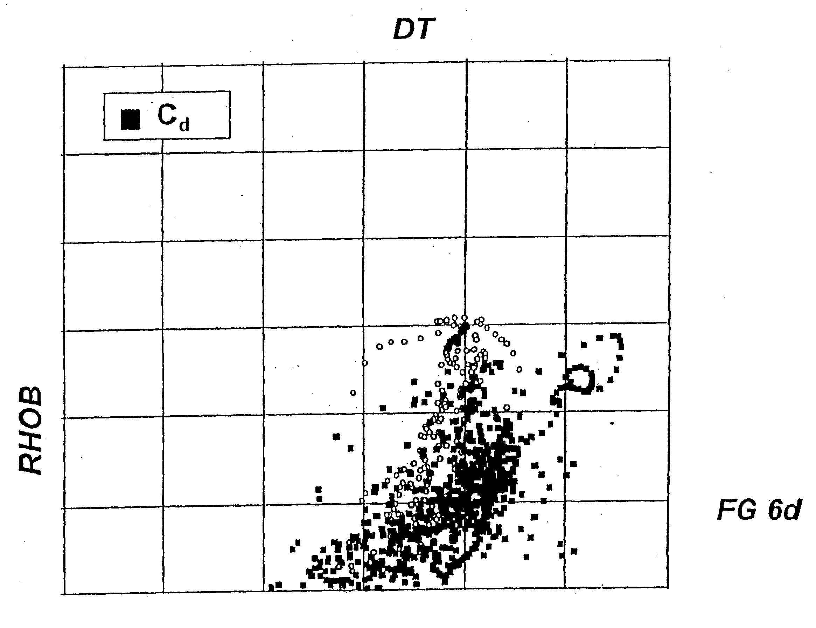

Lorsqu'on examine le degré de similitude MD, on constate qu'il est relativement faible. Cela signifie qu'il y a un faible degré d'appartenance à la classe $C_a$ sans qu'on puisse définir les raisons de ce rejet qui est ambigu par endroits. Cela est confirmé par les figures 6A à 6D, dans lesquelles la figure 6A représente l'ensemble d'apprentissage et les figures 6B, 6C et 6D représentent respectivement les classes d'acceptation $C_a$, d'ambiguïté $C_o$ et de rejet $C_d$. Sur la figure 6B seuls quelques points noirs apparaissent, ce qui signifie qu'il y a très peu de point similaires avec l'ensemble d'apprentissage de la figure 6A, alors qu'ils sont un peu plus nombreux dans la classe d'ambiguïté $C_o$ (figure 6C) et relativement nombreux dans la classe de rejet $C_d$ (figure 6D).

Pour confirmer ou infirmer le rejet total, on procède de la même manière que précédemment, en enlevant à chaque fois un log RHOB, VSH, DT ou ILD, c'est-à-dire qu'à chaque fois on ramène l'espace à n-1 dimensions.

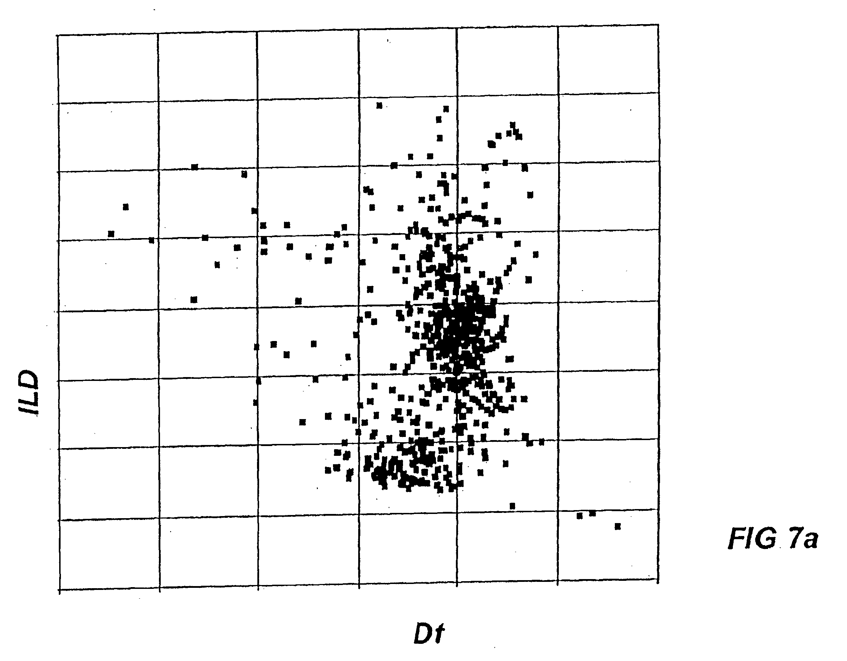

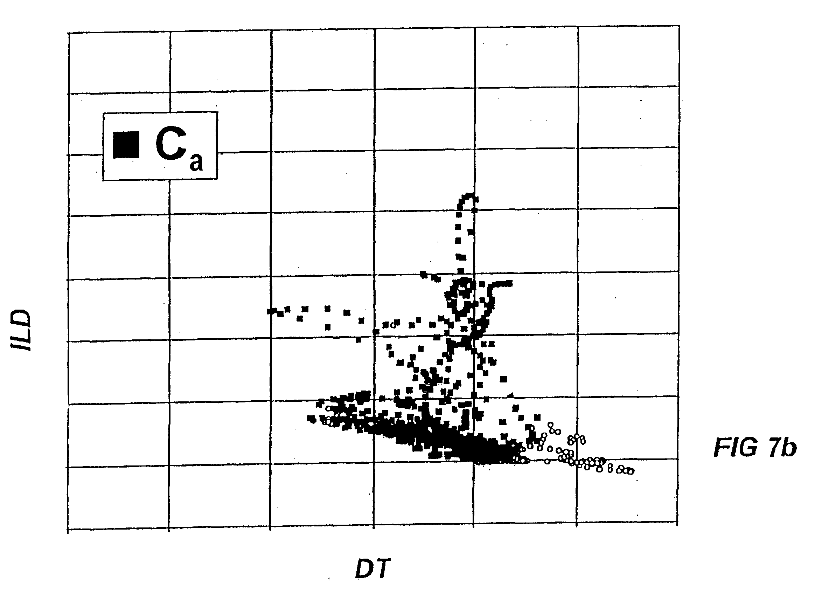

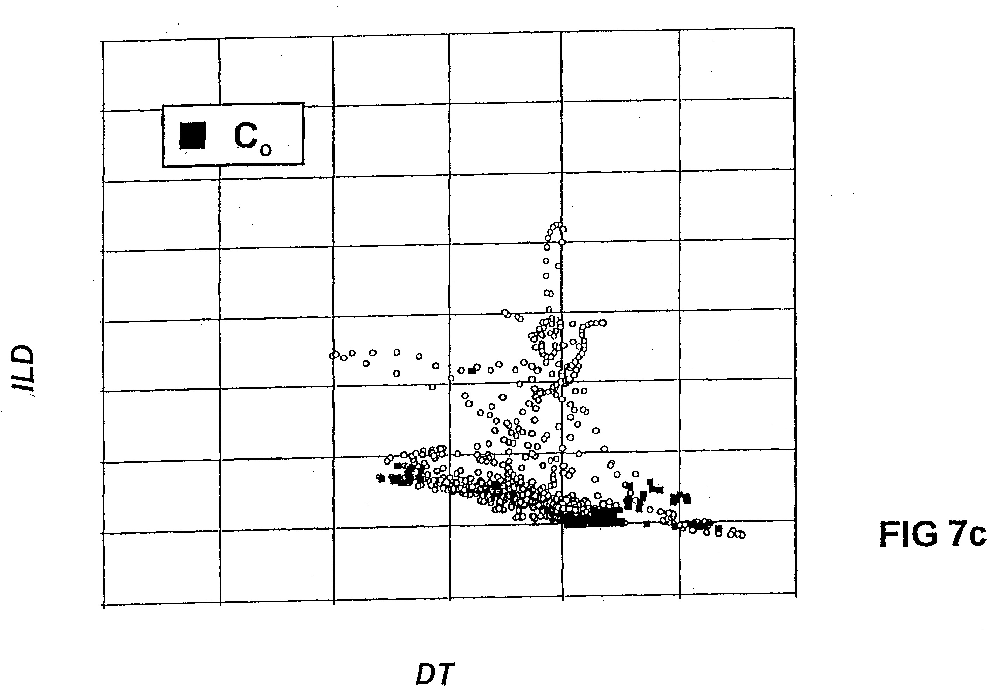

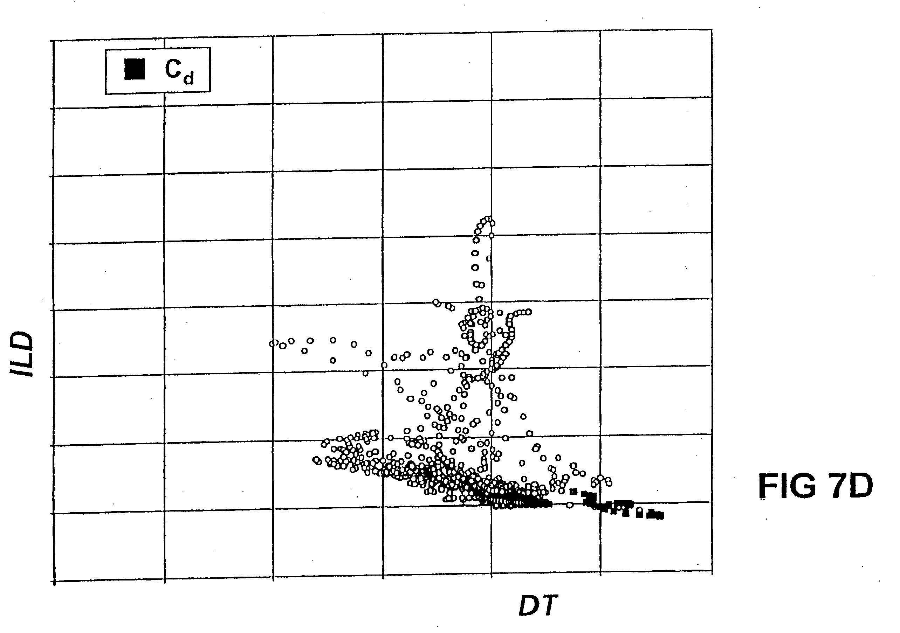

La figure 7A représente un nouvel ensemble d'apprentissage à trois dimensions et concernant les log VSH, DT et ILD, le log RHOB ayant été enlevé. On constate alors qu'un nombre important de points est accepté et affecté à la classe $C_a$ (figure 7B), et que peu de points sont considérés comme ambigus (figure 7C) ou rejetés (figure 7D). La conclusion est que le log RHOB pose problème et que cela est vraisemblablement dû à un défaut de calibration du puits d'application A ou de l'outil qui a été utilisé pour la détermination du log RHOB.

La figure 4C représente les ST et MD pour chaque ensemble à trois dimensions, le premier représentant le résultat après élimination du log RHOB, tandis que le dernier représente le résultat après élimination du Log ILD. On constate que les observations sont toutes rejetées lorsqu'elles concernent les faciès argileux ou argile-schisteux. On en déduit que ce faciès n'est pas compris dans l'ensemble d'apprentissage.

Le tableau (1) ci-dessous résume les différentes constatations ci-dessus.

TABLEAU 1

| STM PUITS A | $C_a$(%) | $C_o$(%) | $C_d$(%) |
|---|---|---|---|
| STM avec 4 logs | 3,89 | 17,96 | 78,15 |
| STM sans RHOB | 78,57 | 15,97 | 5,46 |
| STM sans VSH | 31,93 | 25,84 | 42,23 |
| STM sans DT | 24,89 | 43,80 | 31,31 |
| STM sans Log ILD | 19,22 | 24,79 | 55,99 |

Les pourcentages d'affectations à chaque classe du tableau (1) confirment bien que lorsque la diagraphie RHOB n'est pas prise en compte, les résultats sont nettement meilleurs et que dans le puits d'application A, cette diagraphie RHOB a une influence notable sur le rejet de la plus grande partie des points.

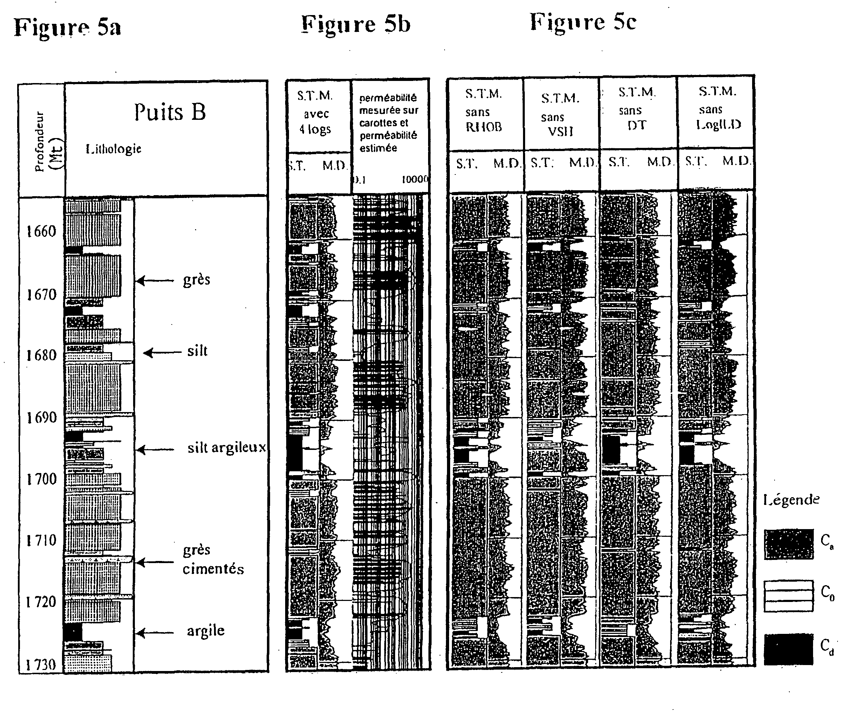

Pour ce qui concerne le puits d'application B, les figures 5A à 5C et 8A à 9D représentent les différents résultats qui sont regroupés dans le tableau 2 ci-dessous.

TABLEAU 2

| STM PUITS B | $C_a$(%) | $C_o$(%) | $C_d$(%) |
|---|---|---|---|
| STM avec 4 logs | 54,77 | 20,83 | 24,40 |
| STM sans RHOB | 79,27 | 16,10 | 4,63 |
| STM sans VSH | 79,56 | 15,24 | 5,20 |
| STM sans DT | 75,60 | 18,03 | 6,37 |
| STM sans Log ILD | 83,03 | 9,16 | 7,81 |

Sur la figure 5B; l'analyse des diagraphies MD et ST montre que certaines des observations d'application qui sont considérées comme ambiguës correspondent, d'après la diagraphie de la lithologie de la figure 5A, à des faciès argilo-silteux ou argileux non compris dans l'ensemble d'apprentissage. Dans ces faciès la prédiction de la perméabilité est incertaine.

La figure 5C montre, quel que soit le log RHOB, VSH, DT ou ILD qui est enlevé, que la similitude augmente de manière significative ou qu'elle est du même ordre de grandeur.

Lorsqu'on se reporte aux diagrammes croisés (cross plots) des figures 8A à 8D, on observe que la majeure partie des observations du puits B sont similaires aux données de l'ensemble d'apprentissage et affectées donc à la classe d'acceptation $C_a$ avec un pourcentage d'acceptation supérieur à 75 % quel que soit le log enlevé, avec un pourcentage pour la classe d'ambiguïté $C_o$ compris entre 9 et 18 % et un pourcentage pour la classe de rejet $C_d$ compris entre 4, 63 et 7,81 %. Toutefois, il faut noter qu'à chaque élimination d'une diagraphie, on perd en précision par rapport à la figure 5B qui concerne le degré d'appartenance de l'ensemble à quatre diagraphies. Cela est particulièrement le cas où le VSH est enlevé puisque l'augmentation du degré de similitude MD amènerait à penser que les faciès silteux et argileux sont inclus dans l'ensemble d'apprentissage alors qu'ils sont rejetés par les autres degrés d'appartenance. Or, il n'en est rien si on compare les diagrammes des figures 8D et 9D sur lesquels on constate qu'il y a réellement rejet d'un nombre relativement élevé de points, lequel rejet est confirmé par les MD du STM sans RHOB, sans DT et sans ILD sur lesquels les faciès argilo-silteux et argileux sont bien exclus de l'ensemble d'apprentissage et ne sont pas, en conséquence, affectés à la classe d'acceptation $C_a$.

La méthode selon l'invention qui est une méthode des seuils de similitude (STM) permet donc de nuancer les résultats de l'estimation de la perméabilité et d'identifier des niveaux silteux et argileux non inclus dans l'ensemble d'apprentissage.

La particularité de la méthode selon l'invention est d'être indépendante des processus d'interprétation utilisés et d'être très performante pour évaluer la cohérence entre plusieurs ensembles de données ou d'observations.

Enfin, la méthode selon la présente invention peut être appliquée dans de nombreux cas. Elle peut être utilisée :

- en amont d'une étude diagraphique, pour évaluer la cohérence des données entre plusieurs puits ;
- dans le cadre d'une caractérisation en électro-faciès ou pour l'estimation de mesures continues ou discrètes;
- pour caractériser la représentativité d'une zone carottée sur plusieurs puits ;
- dans un cadre plus géologique, pour caractériser d'un point de vue diagraphique des faciès ou des environnements décrits sur les carottes.

## Revendications

1. Méthode de caractérisation de la cohérence de mesures effectuées dans un milieu donné, consistant à :

   - prélever N types de mesures de référence en chaque point ($P_i$) d'un ensemble de référence donné dudit milieu, chaque point ($P_i$) étant défini par une cote profondeur, le groupe des N mesures associées à chaque point ($P_i$) constituant une observation de référence ($X_i$),
   - constituer au moins un ensemble d'apprentissage à N dimensions renfermant tous lesdits points ($P_i$),
   - prélever au moins N mesures d'application en chaque point ($Q_i$) d'un ensemble d'application dudit milieu qui est différent dudit ensemble de référence, chaque groupe de mesures d'application associées audit point ($Q_i$) constituant une observation d'application ($X_i$),
   - comparer chaque observation d'application (x) avec toutes les observations de référence ($X_i$) dudit ensemble d'apprentissage,

   **caractérisée en ce qu'**elle consiste à :

   - construire pour chaque observation de référence ($X_i$) de l'ensemble d'apprentissage, un domaine de voisinage ($D_i$) à l'aide du processus des k- plus proches voisins (K-PPV), lesdits domaines de voisinage constituant ledit ensemble d'apprentissage qui définit une classe d'acceptation ($C_a$) pour des observations d'application (x) de l'ensemble d'application,
   - définir un degré d'appartenance des observations d'application (x) à ladite classe d'acceptation ($C_a$), chaque observation d'application (x) étant affectée à la classe d'acceptation ($C_a$) lorsque son degré d'appartenance est au moins supérieur à un premier seuil ($S_1$).

2. Méthode selon la revendication 1, **caractérisée en ce que** chaque observation d'application (x) est affectée à une de trois classes constituées de la classe d'acceptation ($C_a$), d'une classe d'ambiguïté ($C_o$) ou d'une classe de rejet ($C_d$).

3. Méthode selon la revendication 1, **caractérisée en ce que** le degré d'appartenance comprend au moins deux seuils ($S_1$, $S_2$), le deuxième seuil étant inférieur au premier seuil ($S_1$).

4. Méthode selon la revendication 3, **caractérisée en ce qu'**une donnée d'application (x) est affectée à la classe de rejet ($C_d$) lorsque son degré d'appartenance est inférieur audit deuxième seuil ($S_2$).

**5.** Méthode selon les revendications 2 et 3, **caractérisée en ce qu'**une donnée d'application (x) est affectée à la classe d'ambiguïté lorsque son degré d'appartenance est compris entre $S_1$ et $S_2$.

**6.** Méthode selon la revendication 1, **caractérisée en ce que** le degré d' appartenance est défini car une fonction d'appartenance:

$$\mu_i(x) = e^{\left[-\frac{x - X_i}{\sigma_i}\right]} \qquad (1)$$

dans laquelle

$X_i$ est une observation de l'ensemble d'apprentissage, i étant compris entre 1 et na,

$n_a$ correspond au nombre d'observations de référence de l'ensemble d'apprentissage,

$\sigma_i$ est le rayon du domaine centré sur l'observation $X_i$,

x est une observation d'application de l'ensemble d'application.

**7.** Méthode selon la revendication 6, **caractérisée en ce que** le degré d'appartenance $\mu(x)$ correspond à la moyenne des k' plus fortes appartenances $\mu_i(x)$ aux domaines $D_i$ de l'ensemble d'apprentissage.

**8.** Méthode selon la revendication 7, **caractérisée en ce que** la moyenne k' est comprise entre 1 et k.

**9.** Méthode selon la revendication 8, **caractérisée en ce que** la valeur de k' est très supérieure à 1.

**10.** Méthode selon la revendication 1, **caractérisée en ce que** pour lever une ambiguïté attachée à une observation d'application (x), on construit un ensemble d'apprentissage à n-1 dimensions, la dimension enlevée correspondant à un type de mesures.

**Patentansprüche**

**1.** Verfahren zur Charakterisierung der Kohärenz von in einer bestimmten Umgebung bzw. Zone durchgeführten Messungen, umfassend:

- das Nehmen von N Typen von Bezugsmessungen in jedem Punkt ($P_i$) einer bestimmten Bezugsgruppe der genannten Umgebung bzw. Zone, wobei jeder Punkt ($P_i$) durch ein Tiefenmaß definiert wird und die Gruppe von N jedem Punkt ($P_i$) zugeordneten Messungen eine Bezugsbeobachtung ($X_i$) bildet,
- das Bilden von wenigstens einer Lerngruppe mit N Dimensionen, welche die genannten Punkte ($P_i$) alle einschließt,
- das Nehmen von wenigstens N Applikationsmessungen in jedem Punkt ($Q_i$) einer Applikationsgruppe der genannten Umgebung bzw. Zone, die sich von der genannten Bezugsgruppe unterscheidet, wobei jede Gruppe der dem genannten Punkt ($Q_i$) zugeordneten Applikationsmessungen eine Applikationsbeobachtung ($X_i$) bildet,
- das Vergleichen jeder Applikationsbeobachtung (x) mit allen Bezugsbeobachtungen ($X_i$) der genannten Lemgruppe,

**dadurch gekennzeichnet, dass** es darin besteht:

- für jede Bezugsbeobachtung ($X_i$) der Lemgruppe mit Hilfe der k-nächste-Nachbarn-Methode (processus des k- plus proches voisins (K-PPV)) einen Umgebungsbereich ($D_i$) zu konstruieren, wobei die genannten Umgebungsbereiche die besagte Lerngruppe bilden, die eine Akzeptationsklasse ($C_a$) für Applikationsbeobachtungen (x) der Applikationsgruppe definiert,
- einen Grad der Zugehörigkeit der Applikationsbeobachtungen (x) zu der genannten Akzeptationsklasse ($C_a$) zu definieren, wobei jede Applikationsbeobachtung (x) der Akzeptationsklasse ($C_a$) zugeteilt wird, wenn ihr Zugehörigkeitsgrad mindestens höher als eine erste Schwelle ($S_1$) ist.

2. Verfahren nach Anspruch 1, **dadurch gekennzeichnet, dass** jede Applikationsbeobachtung (x) einer der drei Klassen zugeteilt wird, die gebildet werden durch die Akzeptationsklasse ($C_a$), eine Unbestimmtheits- bzw. Mehrdeutigkeitsklasse ($C_o$) oder eine Verwerfungsklasse ($C_d$).

3. Verfahren nach Anspruch 1, **dadurch gekennzeichnet, dass** der Zugehörigkeitsgrad wenigstens zwei Schwellen ($S_1$, $S_2$) umfasst, wobei die zweite Schwelle niedriger ist als die erste Schwelle ($S_1$).

4. Verfahren nach Anspruch 3, **dadurch gekennzeichnet, dass** der Verwerfungsklasse ($C_d$) eine Applikationsgröße (x) zugeteilt wird, wenn ihr Zugehörigkeitsgrad niedriger ist als die genannte zweite Schwelle ($S_2$).

5. Verfahren nach den Ansprüchen 2 und 3, **dadurch gekennzeichnet, dass** der Unbestimmtheits- bzw. Mehrdeutigkeitsklasse eine Applikationsgröße (x) zugeteilt wird, wenn ihr Zugehörigkeitsgrad zwischen $S_1$ und $S_2$ enthalten ist.

6. Verfahren nach Anspruch 1, **dadurch gekennzeichnet, dass** der Zugehörigkeitsgrad definiert wird durch eine Zugehörigkeitsfunktion:

$$\mu_i(x) = e^{\left[-\frac{x - X_i}{\sigma_i}\right]} \qquad\qquad (1)$$

in der

$X_i$ eine Beobachtung der Lerngruppe ist, wobei i zwischen 1 und $n_a$ enthalten ist,
$n_a$ der Anzahl der Bezugsbeobachtungen der Lemgruppe entspricht,
$\sigma_i$ der Radius des auf die Beobachtung $X_i$ zentrierten Bereichs ist,
x eine Applikationsbeobachtung der Applikationsgruppe ist.

7. Verfahren nach Anspruch 6, **dadurch gekennzeichnet, dass** der Zugehörigkeitsgrad $\mu(x)$ dem Mittelwert der k' stärksten Zugehörigkeiten $\mu_i(x)$ zu den Bereichen $D_i$ der Lerngruppe entspricht.

8. Verfahren nach Anspruch 7, **dadurch gekennzeichnet, dass** der Mittelwert k' zwischen 1 und k enthalten ist.

9. Verfahren nach Anspruch 8, **dadurch gekennzeichnet, dass** der Wert von k' sehr viel größer als 1 ist.

10. Verfahren nach Anspruch 1, **dadurch gekennzeichnet, dass** man, um die mit einer Applikationsbeobachtung (x) verbundene Mehrdeutigkeit aufzuheben, eine Lemgruppe mit n-1 Dimensionen konstruiert, wobei die weggenommene bzw. weggelassene Dimension einem Typ von Messungen entspricht.

**Claims**

1. Method of characterizing the coherence of measurements made in a given medium consisting in:

- taking N types of reference measurements at each point ($P_i$) of a given reference set of the said medium, each point ($P_i$) being defined by a depth dimension, the group of N measurements which are associated with each point ($P_i$) constituting a reference observation ($X_i$),
- forming at least one N-dimensional learning set containing all the said points ($P_i$),
- taking at least N application measurements at each point ($Q_i$) of an application set of the said medium, which is different from the said reference set, each group of application measurements which are associated with the said point ($Q_i$) constituting an application observation ($x_i$),
- comparing each application observation (x) with all the reference observations ($X_i$) of the said learning set,

**characterized in that** it consists in:

- constructing a neighbourhood domain ($D_i$) for each reference observation ($X_i$) of the learning step using the k nearest neighbours process (K-NN), the said neighbourhood domains constituting the said learning set which defines an acceptance class ($C_a$) for application observations (x) in the application set,
- defining a degree of membership of the application observations (x) to the said acceptance class ($C_a$), each application observation (x) being assigned to the acceptance class ($C_a$) when its membership degree is at least greater than a first threshold ($S_1$).

2. Method according to Claim 1, **characterized in that** each application observation (x) is assigned to one of three classes consisting of the acceptance class ($C_a$), an ambiguity class ($C_o$) or a reject class ($C_d$).

3. Method according to Claim 1, **characterized in that** the membership degree comprises at least two thresholds ($S_1$, $S_2$), the second threshold being less than the first threshold ($S_1$).

4. Method according to Claim 3, **characterized in that** an application datum (x) is assigned to the reject class ($C_d$) when its membership degree is less than the said second threshold ($S_2$).

5. Method according to Claims 2 and 3, **characterized in that** an application datum (x) is assigned to the ambiguity class when its membership degree lies between $S_1$ and $S_2$.

6. Method according to Claim 1, **characterized in that** the membership degree is defined by a membership function:

$$\mu_i(x) = e^{\left[ -\frac{x - X_i}{\sigma_i} \right]} \qquad (1)$$

in which

$X_i$    is an observation in the learning set, i lying between 1 and $n_a$,
$n_a$    corresponds to the number of reference observations in the learning set,
$\sigma_i$    is the radius of the domain centred on the observation $X_i$,
x    is an application observation in the application set.

7. Method according to Claim 6, **characterized in that** the membership degree $\mu(x)$ corresponds to the mean of the k' strongest memberships $\mu_i(x)$ to the domains $D_i$ in the learning set.

8. Method according to Claim 7, **characterized in that** the mean k' lies between 1 and k.

9. Method according to Claim 8, **characterized in that** the value of k' is very much greater than 1.

10. Method according to Claim 1, **characterized in that**, in order to clarify an ambiguity attached to an application observation (x), an (n-1)-dimensional learning set is constructed, the dimension removed corresponding to one type of measurements.

FIG 1

FIG 2

FIG 3

Figure 4a  Figure 4b  Figure 4c

# Figure 5a

# Figure 5b

# Figure 5c

| Profondeur (Mt) | | Puits B | | | |
|---|---|---|---|---|---|

Lithologie

grès

silt

silt argileux

grès cimentés

argile

| S.T.M. avec 4 logs | perméabilité mesurée sur carottes et perméabilité estimée |
|---|---|
| S.T. M.D. | 0.1 10000 |

| S.T.M. sans RHOB | S.T.M. sans VSH | S.T.M. sans DT | S.T.M. sans LogILD |
|---|---|---|---|
| S.T. M.D. | S.T. M.D. | S.T. M.D. | S.T. M.D. |

Légende

$C_a$

$C_o$

$C_d$

EP 0 922 239 B1

FIG 6a

EP 0 922 239 B1

FIG 6b

FIG 6c

FIG 6d

FIG 7a

Df

ILD

FIG 7b

DT

ILD

FIG 7c

FIG 7D

FG 8a

DT

RHOB

FIG 8b

FIG 8c

FIG 8d

FIG 9a

DT

ILD

FIG 9b

Dt

ILD

FIG 9c

DT

ILD

$C_0$

FIG 9d